# FASCICULE DE BREVET EUROPEEN

(11) **EP 0 904 977 B1**
(45) Date de publication et mention de la délivrance du brevet: **10.05.2000**
(21) Numéro de dépôt: 98470022.9
(22) Date de dépôt: 04.09.1998
(51) Int. Cl.: B60N 2/08

(54) **Fixation d'un verrou sur un profilé de glissière de siège de véhicule automobile**
Befestigung eines Riegels an einem Schienenprofil eines Kraftfahrzeugsitzes
Locking a bolt to the slide rail of an automotive vehicle seat

(30) Priorité: 25.09.1997 FR 9712103
(43) Date de publication de la demande: 31.03.1999
(73) Titulaire: BERTRAND FAURE EQUIPEMENTS S.A., 92641 Boulogne Cedex (FR)
(72) Inventeur: Levillain, Gaétan, 57000 Metz (FR); Levallois, Samuel, 57000 Metz (FR)
(74) Mandataire: Ballot, Paul Denis Jacques

(56) Documents cités:
- EP-A- 0 441 078
- FR-A- 2 736 311
- US-A- 4 301 988
- US-A- 4 563 044

## Description

L'invention concerne la fixation d'un verrou sur un profilé de glissière de siège de véhicule automobile.

Les glissières permettent le réglage de la position longitudinale du siège par le coulissement relatif d'un profilé mâle dans un profilé femelle et assurent l'immobilisation en position une fois que le réglage est effectué.

Le document FR-A-2736311 (correspondant au préambule de la revendication 1) montre un système de réglage en position utilisant deux telles glissières non motorisées. Le profilé mâle, solidarisé avec l'armature du siège, a une section générale en forme de "U" avec deux ailes ouvertes vers le bas. Le profilé femelle, solidarisé sur le plancher du véhicule automobile, a une section générale en forme de "U" avec deux ailes ouvertes vers le haut et comporte également, sur au moins une aile située du coté de l'aile crantée du profilé mâle, une série de crans.

Une lame élastiquement flexible est disposée à l'intérieur de chaque glissière et comporte une partie d'extrémité formant verrou, une partie intermédiaire et une partie de fixation située à distance de la partie d'extrémité.

Le verrou comporte des créneaux qui s'étendent latéralement au-delà des ailes du profilé mâle en passant dans des découpes ménagées à cet effet dans les dites ailes, et qui viennent s'engager dans les crans du profilé femelle en position de verrouillage. Pour déverrouiller le système de réglage en position, on actionne un palonnier qui agit sur la partie formant verrou de la lame pour dégager les créneaux du verrou des crans du profilé femelle.

Dans la position de verrouillage du système, tout effort qui tend à faire coulisser le profilé mâle dans le profilé femelle est transmis directement des découpes du profilé mâle aux créneaux du verrou, et de ceux-ci aux crans du profilé femelle. Du fait d'une proximité directe des découpes du profilé mâle et des crans du profilé femelle, les contraintes dans la lame flexible se réduisent uniquement à des contraintes de cisaillement des créneaux du verrou, les autres parties de la lame ne subissant alors aucune autre contrainte lorsque cet effort s'exerce.

De ce fait, la fixation de lame sur le fond du profilé mâle peut simplement être réalisée par un rivetage, sertissage ou vissage.

L'invention vise à proposer une nouvelle fixation de la lame sur le fond du profilé mâle, permettant de réduire le nombre de pièces nécessaire à la fixation de la lame pour simplifier le montage.

Avec ces objectifs en vue, l'invention a pour objet une glissière de siège de véhicule automobile comportant:
- un profilé femelle de section en forme de U présentant deux ailes,
- un profilé mâle, de section en forme de U présentant deux ailes, coulissant longitudinalement entre les ailes du profilé femelle,
- un verrou de blocage longitudinal du profilé mâle sur le profilé femelle, le verrou étant formé par une partie d'extrémité d'une lame élastiquement flexible placée à l'intérieur de la glissière et comportant des créneaux qui s'étendent latéralement au delà des ailes du profilé mâle en passant dans des découpes ménagées à cet effet dans les ailes du profilé mâle, et qui s'engagent dans des crans ménagés dans les ailes du profilé femelle, la lame comportant une partie de fixation distante de la partie d'extrémité.

Selon l'invention, cette glissière est caractérisée en ce que la partie de fixation de la lame est maintenue contre le fond du profilé mâle par au moins un embouti réalisé sur chaque aile du profilé mâle et coopérant avec le bord de la partie de fixation.

Grâce à l'invention, la fixation de la lame ne nécessite pas d'organes de fixation supplémentaires et l'encombrement de la fixation est alors limité au profil externe du profilé mâle.

Selon un mode de réalisation préférentiel, les emboutis sont réalisés de manière à presser les bords de la partie de fixation pour la bloquer longitudinalement par rapport au profilé mâle.

Les emboutis sont par exemple réalisés sous une face inférieure de la partie de fixation. La matière refoulée par les emboutis vient à la fois comprimer latéralement les arêtes de la face inférieure de la partie de fixation entre les ailes du profilé mâle et pousser la partie de fixation contre le fond du profilé mâle.

Préférentiellement encore, le bord de la partie de fixation de la lame comporte une denture.

Comme la lame est réalisée dans un matériau plus dur que le matériau du profilé mâle, par exemple un acier à ressort, la matière refoulée par les emboutis pénètrent dans les creux de la denture. Le profilé mâle est alors ancré dans la partie de fixation et on améliore le blocage longitudinal de la partie de fixation.

D'autres caractéristiques et avantages de l'invention apparaîtront dans la description qui va suivre d'un mode de réalisation conforme à l'invention.

On se reportera aux dessins annexés dans lesquels :
- la figure 1 est une vue en coupe longitudinale d'une glissière,
- la figure 2 est une vue en coupe transversale selon la ligne II-II de la figure 1,
- la figure 3 est une vue de dessus partielle de la lame selon la ligne III - III de la figure 2, montrant la denture réalisée dans le chant de la partie de fixation.

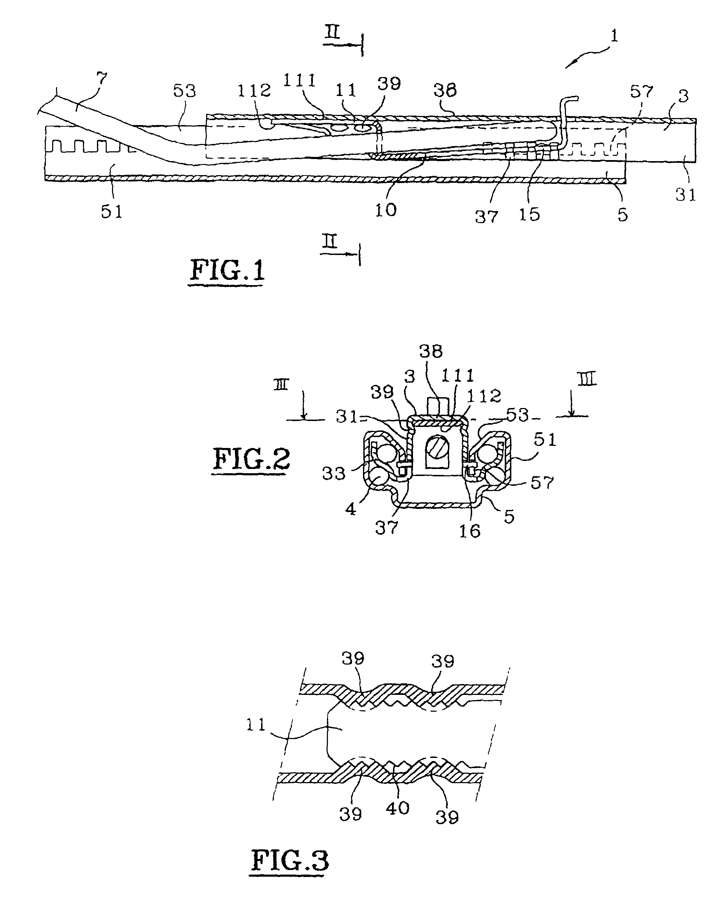

Un système de réglage en position d'un siège comporte classiquement deux glissières parallèles, telle que la glissière 1 montrée en exemple figure 1. Chaque glissière 1 est formée d'un profilé mâle 3, solidaire de l'armature du siège (non représenté), coulissant dans un profilé femelle 5 solidaire du plancher du véhicule.

Le profilé femelle 5 a une section de forme générale en U ouverte vers le haut, comportant deux ailes 51 qui se terminent par des retours 53 en forme de crochet, tournés vers l'intérieur du profilé 5 et vers le bas.

Comme on le voit figure 1, des crans 57 sont réalisés, régulièrement espacés sur toute la longueur du profilé femelle 5, sur les bords d'extrémité des retours 53 en forme de crochets.

Le profilé mâle 3 a aussi une section de forme générale en U ouverte vers le bas et comporte deux ailes 31 qui se prolongent, vers l'extérieur et vers le haut, par des retours 33 qui s'engagent sous les retours 53 en forme de crochet du profilé femelle 5. Comme le montre la figure 2, les retours 53 en forme de crochet du profilé femelle 5 jouxtent les ailes 31 du profilé mâle 3.

Les retours d'ailes 33, 53 des profilés respectifs mâle 3 et femelle 5 sont conformés pour constituer des chemins de roulement pour des billes 4, facilitant le coulissement longitudinal relatif des profilés 3, 5.

Le verrouillage des glissières 1 est assuré par une partie d'extrémité 15 formant verrou d'une lame élastiquement flexible 10, réalisée par exemple en acier à ressort, placée à l'intérieur de la glissière 1 et fixée sur le fond du profilé mâle 3 par une partie de fixation 11 située à distance de la partie d'extrémité 15.

Cette partie d'extrémité 15 comporte des créneaux 16 qui s'étendent latéralement au delà des ailes du profilé mâle 3 en passant dans des découpes 37 qui y sont ménagées à cet effet, les créneaux 16 s'engageant également dans les crans 57 du profilé femelle.

Un palonnier 7 de commande de déverrouillage est prévu pour assurer le déverrouillage des glissières en agissant sur la partie d'extrémité 15 formant verrou pour dégager les créneaux 16 des crans 57 du profilé femelle 5. Lors du déverrouillage, les créneaux 16 restent engagés avec les découpes 37 du profilé mâle 3. Lors du verrouillage, tout effort tendant à faire coulisser le profilé mâle 3 dans le profilé femelle 5 se traduit uniquement par des contraintes de cisaillement des créneaux 16 et les autres parties de la lame 10 ne subissent aucune autre contrainte, du fait d'un jeu de fonctionnement réduit entre les créneaux 16 et les découpes 37. L'élasticité de la lame 10 assure le verrouillage automatique des glissières 1 par le retour en prise des créneaux 16 avec les crans du profilé femelle 5, dès que le palonnier 7 est relâché.

Pour plus de précision sur le fonctionnement d'un tel système de verrouillage, on pourra également se référer au document FR-A-2736311 déjà cité.

Comme le montre la figure 1, la partie de fixation 11 de lame 10 est maintenue contre le fond 38 du profilé mâle 3 par deux emboutis 39 formés par un poinçon réalisant une empreinte de forme oblongue. Les emboutis 39 sont réalisés sensiblement au même niveau et sur l'extérieur de chaque aile 31 du profilé mâle 3.

Comme le montre la figure 2, ces emboutis 39 sont réalisés légèrement sous la partie de fixation 11, par exemple à une distance de 5 mm du fond 38 du profilé mâle 3, c'est à dire environ 1 à 2 millimètres au dessous de la face inférieure 112 de la partie de fixation 11.

De cette manière, la matière refoulée par les emboutis 39, vers l'intérieur du profilé mâle 3, vient comprimer l'arête de la face inférieure 112 entre les ailes 31 du profilé mâle 3 et pousse également la partie de fixation 11 vers le fond 38 du profilé 3, en agissant comme un coin, pour plaquer la face supérieure 112 de la partie de fixation 11 contre le dit fond 38.

Pour améliorer le blocage longitudinal de la lame 10 par rapport au profilé mâle 3, une denture 40 est réalisée, comme le montre la figure 3, sur le bord de la partie de fixation 11. Les dents de la denture 40 sont par exemple de forme triangulaire et la matière refoulée par les emboutis 39 pénètre alors dans les creux de la denture 40, de sorte que le profilé mâle 3 soit ancré dans la partie de fixation 11.

Plusieurs emboutis 39 peuvent être également réalisés dans chaque aile 31 du profilé mâle, comme cela est montré figure 3.

La présence des emboutis 39 permet de limiter l'encombrement du système de fixation au profil extérieur du profilé mâle 3, car aucune partie de la fixation ne dépasse du profilé, contrairement aux systèmes de fixation classiques.

L'invention n'est pas limitée au mode de réalisation donné uniquement à titre d'exemple. En particulier :
- Les emboutis 39 pourraient aussi être réalisés de manière à seulement maintenir la partie de fixation 11 contre le fond 38 du profilé mâle 3, tout en autorisant un déplacement longitudinal de cette partie de fixation 11, si nécessaire. En effet, le positionnement longitudinal de la lame 10 par rapport au profilé mâle 3 est toujours assuré par l'engagement des créneaux 16 avec les découpes 37 ménagées dans les ailes 31 du profilé mâle 3, que la partie d'extrémité 15 formant verrou soit déverrouillée ou non. De plus, cette disposition permet de faciliter le déplacement des créneaux 16 dans les découpes 37, en évitant un éventuel coincement qui pourrait résulter d'un jeu de fonctionnement faible, dans le sens longitudinal de déplacement de la glissière 1, entre les créneaux 16 et les découpes 37,
- Le système de fixation est transposable, par l'homme du métier, aux glissières dont le verrouillage est opéré par une lame 10 différente de celle décrite à titre d'exemple.

## Revendications

1. Glissière (1) de siège de véhicule automobile comportant :
- un profilé femelle (5) de section en forme de U présentant deux ailes (51),
- un profilé mâle (3), de section en forme de U présentant deux ailes (31), coulissant longitudinalement entre les ailes (51) du profilé femelle (5),
- un verrou de blocage longitudinal du profilé mâle (3) sur le profilé femelle (5), le verrou étant formé par une partie d'extrémité (15) d'une lame élastiquement flexible (10) placée à l'intérieur de la glissière (1) et comportant des créneaux (16) s'étendant latéralement au delà des ailes (31) du profilé mâle (3) en passant dans des découpes (37) ménagées à cet effet dans les ailes (31) du profilé mâle (3), et qui s'engagent dans des crans (57) ménagés dans les ailes (51) du profilé femelle (5), la lame (10) comportant une partie de fixation (11) distante de la partie d'extrémité (15),
la glissière étant caractérisée en ce que la partie de fixation (11) de la lame (10) est maintenue contre le fond (38) du profilé mâle (3) par au moins un embouti (39) réalisé sur chaque aile (31) du profilé mâle (3) et coopérant avec le bord de la partie de fixation (11).

2. Glissière selon la revendication 1, caractérisée en ce que les emboutis (39) sont réalisés de manière à presser les bords de la partie de fixation (11) pour la bloquer longitudinalement par rapport au profilé mâle (3).

3. Glissière selon la revendication 2, caractérisée en ce que le bord de la partie de fixation (11) de la lame (10) comporte une denture (40).

4. Glissière selon la revendication 1, caractérisée en ce que deux emboutis (39) sont réalisés sur chaque aile (31) du profilé mâle (3).

## Patentansprüche

1. Gleitschiene (1) für Kraftfahrzeugsitz, mit:
- einem weiblichen Profil (5) von U-Querschnittsform, das zwei Arme (51) aufweist,
- einem männlichem Profil (3) von U-förmigen Querschnitt, das zwei Arme (31) aufweist, die längs zwischen den Armen (51) des weiblichen Profils (5) gleiten,
- einem Längsblockierungsriegel des männlichen Profils (3) an dem weiblichen Profil (5), wobei der Riegel durch einen Endabschnitt (15) einer elastisch verformbaren Zunge (10) gebildet ist, die im Inneren der Gleitschiene (1) angeordnet ist, und zwei Scharten (16) aufweist, die sich seitlich über die Arme (31) des männlichen Profils (3) hinauserstrecken, unter Eindringen in Ausschnitte (37), die hierzu in den Armen (31) des männlichen Profils (3) ausgebildet sind, und die in Krampen (57) eingreifen, die in den Armen (51) des weiblichen Profils (5) ausgebildet sind, wobei die Zunge (10) einen Befestigungsabschnitt (11) aufweist, der von dem Endabschnitt (15) beabstandet ist,
wobei die Gleitschiene dadurch gekennzeichnet ist, daß der Befestigungsabschnitt (11) der Zunge (10) gegen den Boden (38) des männlichen Profils (3) durch wenigstens eine Stulpe (39) gehalten wird, der an einem jeden Arm (31) des männlichen Profils (3) ausgebildet ist und mit dem Rand des Befestigungsabschnitts (11) zusammenwirkt.

2. Gleitschiene nach Anspruch 1, dadurch gekennzeichnet, daß die Stulpen (39) derart ausgebildet sind, daß sie die Ränder des Befestigungsabschnitts (11) drücken, um ihn längs bezüglich des männlichen Profils (3) zu blockieren.

3. Gleitschiene nach Anspruch 2, dadurch gekennzeichnet, daß der Rand des Befestigungsabschnitts (11) der Zunge (10) eine Zahnung (40) aufweist.

4. Gleitschiene nach Anspruch 1, dadurch gekennzeichnet, daß zwei Stulpen (39) an einem jeden Arm (31) des männlichen Profils (3) ausgebildet sind.

## Claims

1. Slide (1) for motor vehicle seat including:
- a female profile (5) of U-shaped cross-section possessing two flanges (51),
- a male profile (3), of U-shaped cross-section possessing two flanges (31), sliding longitudinally between the flanges (51) of the female profile (5),
- a latch for longitudinally locking the male profile (3) to the female profile (5), the latch being formed by an end part (15) of an elastically flexible strip (10) placed in the inside of the slide (1) and including teeth (16) extending laterally beyond the flanges (31) of the male profile (3) by passing through cutouts (37) made for this purpose in the flanges (31) of the male profile (3), and engaging in notches (57) made in the flanges (51) of the female profile (5), the strip (10) including a fixing part (11) remote from the end part (15),
the slide being characterized in that the fixing part (11) of the strip (10) is held against the bottom (38) of the male profile (3) by at least one indentation (39) formed on each flange (31) of the male profile (3) and cooperating with the edge of the fixing part (11).

2. Slide according to Claim 1, characterized in that the indentations (39) are formed so as to press the edges of the fixing part (11) in order to lock the latter longitudinally with respect to the male profile (3).

3. Slide according to Claim 2, characterized in that the edge of the fixing part (11) of the strip (10) includes toothing (40).

4. Slide according to Claim 1, characterized in that two indentations (39) are formed on each flange (31) of the male profile (3).
